# EUROPEAN PATENT SPECIFICATION

(11) **EP 1 701 873 B1**
(45) Date of publication and mention of the grant of the patent: **16.03.2011**
(21) Application number: 04801723.0
(22) Date of filing: 07.12.2004
(51) Int. Cl.: B60T 8/34

(54) **TRUCK COMPRISING A BRAKE SYSTEM**
LASTWAGEN MIT EINER BREMSANLAGE
CAMION POSSEDANT UN SYSTEME DE FREINAGE

(30) Priority: 18.12.2003 SE 0303431
(43) Date of publication of application: 20.09.2006
(73) Proprietor: Cargotec Patenter Handelsbolag, 341 81 Ljungby (SE)
(72) Inventor: LÖNN, Jan, S-340 14 Lagan (SE)
(74) Representative: Lundquist, Lars-Olof
(86) International application number: PCT/SE2004/001816
(87) International publication number: WO 2005/058663

(56) References cited:
- DE-A1- 3 423 944
- DE-A1- 4 028 552
- DE-A1- 4 438 721

## Description

The present invention relates to a truck, comprising:
- an engine;
- a throttle control lever, being manually actuatable by the operator of the truck;
- a control system, being arranged for regulating the speed of the engine; and
- a brake system, including at least one brake and being arranged for braking the truck when decelerating.

The invention also relates to a brake system for such a truck.

As used herein, "truck" relates to a counterweight truck, side loading truck, container truck or similar vehicle for handling goods.

In trucks having a hydrostatic transmission, it is common that the braking torque of the truck engine is used for braking the truck. Such brake systems are inexpensive, since an external brake can be dispensed with. When decelerating, the transmission gears down, wherein the speed of the truck engine is increased. The more rapid the deceleration is, the higher the speed of the truck engine will become. Consequently, such a brake system has the disadvantage that the noise from the truck engine is increased when decelerating. Furthermore, the increased speed results in an increased wear of the truck engine.

An additional problem with trucks having a hydrostatic transmission being braked by means of the braking torque of the truck engine is that it is difficult to brake the truck in an exact and distinct manner. This is particularly pronounced when the truck is to be braked to a standstill from a regular and low speed. Such situations occur, for instance, when loading and unloading with fork trucks, where it is very important that the fork truck is positioned correctly.

The object of the present invention is to at least partially solve these problems, and to achieve a truck having a brake system taking care not to strain the truck engine, as well as allowing an excellent control of the braking process.

The truck and the brake system according to the invention is characterized in that it includes:
- an accumulator, being arranged for containing pressurized hydraulic fluid; and
- a proportional valve, being arranged between the accumulator and the brake,
wherein the control system is arranged for detecting when the throttle control lever is in a position indicating that the operator desires the propulsion of the truck to be stopped and, when being in this position, for regulating the proportional valve so that it pressurizes the brake system and activates the brake, as well as for throttling down the speed of the engine.

Figure 1 is a schematic representation of a hydraulic diagram of a brake system according to the invention.

Figure 2 is a schematic representation of a hydraulic diagram of a hydrostatic transmission system and portions of a brake system according to the invention.

Figure 3 shows a flow chart for the regulation of a brake system according to the invention.

In the following, the invention will be described starting from a fork truck, being driven by a diesel engine and including a hydrostatic transmission system. The transmission system includes a transmission pump, a hydraulic motor and a computerized control system, including a microprocessor which controls the hydraulic fluid flow in the transmission system in a known way.

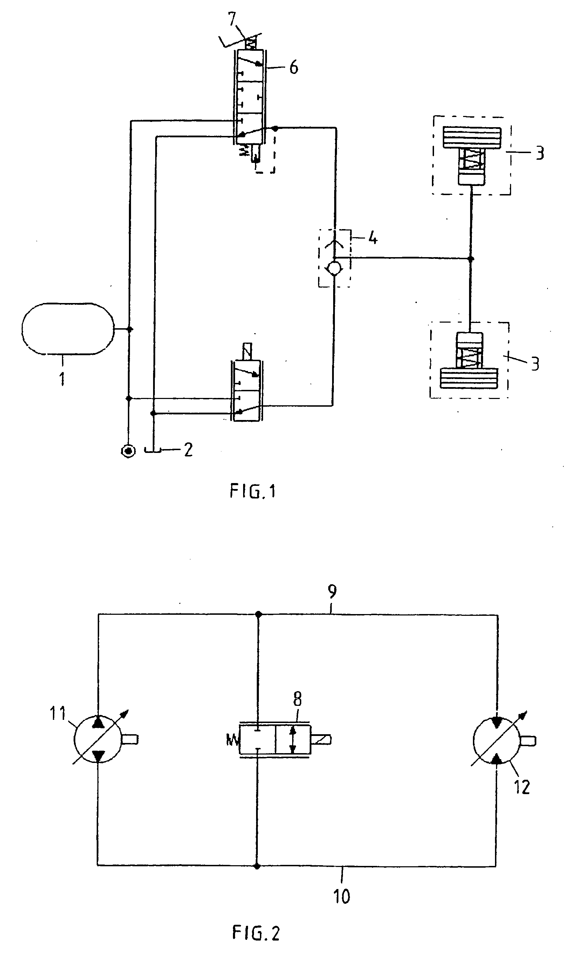

Figure 1 illustrates a brake system according to the invention, said brake system being arranged in the above-described fork truck. The brake system includes an accumulator 1 with pressurized hydraulic fluid and a tank 2 for receiving the hydraulic fluid. A pump (not shown) is arranged between the tank 2 and the accumulator 1 for pumping the hydraulic fluid from the tank 2 to the accumulator 1 in a known way, and to thereby maintain the pressure in the accumulator 1. Furthermore, the brake system includes brakes 3 in the form of a pair of oil bath multiple disc brakes. The brake system also includes a shuttle valve 4, through which the brakes 3 are connected to the rest of the brake system, as is evident from Figure 1. The brakes 3 are arranged at the fork truck drive axle, being driven by the hydraulic motor, in order to interact with the drive axle when decelerating, to brake its rotational movement and to thereby brake the fork truck.

Furthermore, the brake system includes a proportional valve 5, being controllable via the control system. The proportional valve 5 is arranged between the accumulator 1 and the shuttle valve 4 in order to pressurize the brake system when decelerating and to activate the brakes 3 so that these deliver the desired braking torque.

When decelerating, the operator of the fork truck releases the throttle control lever of the truck. The control system is arranged for detecting this in a known way, for example by means of the control system including a sensor at the throttle control lever which transmits the position of the throttle control lever to the microprocessor. Furthermore, the control system is arranged for detecting the speed of the fork truck in a known way.

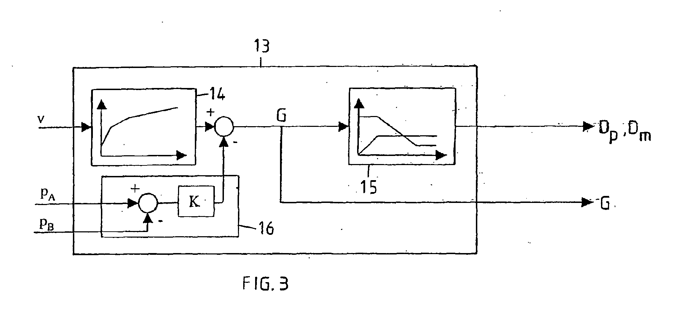

In the following, the regulation of the transmission system and the speed of the diesel engine in the course of a braking process will be described in greater detail with reference to Figure 3. When the control system detects that the throttle control lever is in a position indicating that the operator desires the propulsion of the fork truck to be stopped, the control system transmits the actual speed value v of the fork truck to the microprocessor 13. In the microprocessor 13, there is a table where, for each speed value v, there is a throttle control lever value corresponding to a throttle opening of the diesel engine at which the transmission system only drives the wheels of the fork truck without creating any high pressures in the transmission system. As a first step in said regulation, the control system matches the actual speed of the fork truck to the corresponding throttle control lever value. This step is illustrated at 14 in Figure 3. Accordingly, the output signal from this first regulation step 14 is a throttle control lever value G. The throttle control lever value G is transmitted to the diesel engine, as well as to a second regulation step 15, where the control system converts the throttle control lever value to suitable displacement values Dp and Dₘ for the transmission pump and the hydraulic motor, said displacement values Dp and Dₘ then being used for regulating the displacement of the transmission pump and the hydraulic motor. Accordingly, the result of the two regulation steps is that the control system makes the transmission system essentially non-pressurized when the operator releases the throttle control lever. At the same time, the control system opens the proportional valve 5, so that the brake system is pressurized, wherein a braking action, being a function of the opening degree of the proportional valve 5, is obtained. While the braking action prevails, the control system regulates the speed of the diesel engine and the transmission system in accordance with the above-described method, wherein the non-pressurized condition of the transmission system is maintained at the reduced speed of the fork truck. Accordingly, the speed of the diesel engine is throttled down in relation to the reduced speed of the fork truck, and the control system allows a relatively high speed in the beginning of the braking sequence when the fork truck has a relatively high speed, whereupon the control system successively reduces the engine speed concurrently with the speed of the fork truck being reduced.

Preferably, said regulation also includes a third regulation step 16, where hydraulic pressure values P_{A} and P_{B} before and after the hydraulic motor are compared to each other. If an imbalance is detected between the hydraulic pressure values P_{A} and P_{B}, the microprocessor corrects the throttle control lever value G, as is evident from Figure 3, said correction in its turn providing pressure-equalizing corrections of the speed of the diesel engine and the displacement of the transmission system. Accordingly, the third regulation step increases the accuracy of the regulation.

In addition to the above-described proportional valve 5, the brake system preferably also includes a manually adjustable brake valve 6 in the form of a directional valve being arranged between the accumulator 1 and the shuttle valve 4. In other words, the brake valve 6 is arranged in parallel with the proportional valve 5. The brake valve 6 is adjusted by means of a manual brake operating lever 7 of the fork truck. In normal operation, the brake valve is closed. In case something goes wrong with the above-described automatic braking method, or in case a panic situation comes up, however, the operator can brake the fork truck manually by means of depressing the brake operating lever 7 and pressurizing the brake system via the brake valve 6. Accordingly, the brake valve 6 functions as a safety valve.

In fork trucks having a conventional hydrostatic transmission system, the transmission pump normally is connected to the diesel engine by means of a fixed, mechanical connection. As the transmission pump and the hydraulic motor are in hydraulic connection with each other, the speed of the diesel engine is a function of the ratio between the displacement of the transmission pump and the hydraulic motor. In order to disengage the transmission pump and the hydraulic motor, and to thereby remove the limits set by said displacement ratio to the possibility to throttle down the speed of the diesel engine when decelerating, the brake system preferably includes also a second proportional valve 8 (see Figure 2). The second proportional valve 8 is arranged between a first hydraulic line 9 and a second hydraulic line 10 of the transmission system, said hydraulic lines 9, 10 passing from the transmission pump 11 to the hydraulic motor 12 and from the hydraulic motor 12 to the transmission pump 11, respectively, in order to conduct hydraulic fluid between the transmission pump 11 and the hydraulic motor 12. Accordingly, as is evident from Figure 2, the hydraulic lines 9, 10 constitute a closed hydraulic circuit between the transmission pump 11 and the hydraulic motor 12. Just as the first proportional valve 5, the second proportional valve 8 is controllable via the control system. When decelerating, the control system transmits a valve-opening signal to the second proportional valve 8, wherein the hydraulic lines 9 and 10 are short-circuited. In that way, the hydraulic motor 12 can be entirely or partially disengaged from the transmission pump 11, wherein the diesel engine rapidly can be throttled down to idling speed without having to pay any attention to the hydraulic motor 12. Thereby, the opening percentage of the second proportional valve 8 follows a predetermined algorithm of the control system.

According to one embodiment of the invention, the control system is arranged for pressurizing the brake system via the proportional valve 5 and for applying a predetermined, permanent braking torque onto the brakes 3 when the speed of the fork truck falls below a predetermined speed, for example 2 km/h.

In that way, the advantage is obtained that the deceleration from the predetermined speed to a standstill takes place in a predictable, exact and distinct manner.

It will be appreciated that the invention is not limited to fork trucks. Advantageously, also other truck types can be braked by means of a brake system according to the invention. Furthermore, it will be appreciated that the invention is not limited to trucks operating with combustion engines and a hydrostatic transmission. The brake system can be used also in trucks having an electric or a gearbox drive, in which case the control system has to be adapted to the drive system in question. Furthermore, it will be appreciated that the invention is equally applicable in those cases where the truck is equipped with other types of brakes than the above-described oil bath multiple disc brakes. Furthermore, the brakes, which can be dry or wet, can be arranged in another way. For instance, the brakes can be arranged at wheel motors of the truck in those cases where the truck is equipped with such motors.

## Claims

1. A truck, comprising:
- an engine;
- a throttle control lever, being manually actuatable by the operator of the truck;
- a control system, being arranged for regulating the speed of the engine; and
- a brake system, including at least one brake (3) and being arranged for braking the truck when decelerating,
**characterized in that** the brake system includes:
- an accumulator (1), being arranged for containing pressurized hydraulic fluid; and
- a proportional valve (5), being arranged between the accumulator (1) and the brake (3),
wherein the control system is arranged for detecting when the throttle control lever is in a position indicating that the operator desires the propulsion of the truck to be stopped and, when being in this position, for regulating the proportional valve (5) so that it pressurizes the brake system and activates the brake (3),
as well as for throttling down the speed of the engine.

2. Truck according to claim 1, **characterized in that** the brake system further includes:
- a brake valve (6), being arranged between the accumulator (1) and a shuttle valve (4); and
- a brake operating lever (7), being manually actuatable by the operator of the truck,
wherein the brake valve (6) is arranged for pressurizing the brake system and activating the brake (3) when the operator actuates the brake operating lever (7).

3. Truck according to any one of claims 1 and 2,
**characterized in that** said throttling down of the engine speed takes place as a function of the speed of the truck.

4. Truck according to any one of claims 1-3,
**characterized in that** the control system is arranged for pressurizing the brake system via the proportional valve (5) and for applying a predetermined, permanent braking torque onto the brakes (3) when the speed of the truck falls below a predetermined speed.

5. Truck according to claim 4, **characterized in that** said speed is 2 km/h.

6. Truck according to any one of claims 1-5, wherein the truck also includes a hydrostatic transmission system, being arranged for driving the truck and including a transmission pump (11), being driven by the engine, and a hydraulic motor (12), **characterized in that** the brake system includes a second proportional valve (8), being regulated by the control system and arranged for short-circuiting hydraulic lines (9, 10) between the transmission pump (11) and the hydraulic motor (12) when decelerating, wherein the hydraulic motor (12) is entirely or partially disengaged from the transmission pump (11).

7. A brake system, intended to be arranged in a truck, the truck including:
- an engine;
- a throttle control lever, being manually actuatable by the operator of the truck; and
- a control system, being arranged for regulating the speed of the engine;
the brake system including at least one brake (3) and being arranged for braking the truck when decelerating,
**characterized in that** the brake system further includes:
- an accumulator (1), being arranged for containing pressurized hydraulic fluid; and
- a proportional valve (5), being arranged between the accumulator (1) and the brake (3),
wherein the control system is also part of the brake system and is arranged for detecting when the throttle control lever is in a position indicating that the operator desires the propulsion of the truck to be stopped and, when being in this position, for regulating the proportional valve (5) so that it pressurizes the brake system and activates the brake (3), as well as for throttling down the speed of the engine.

## Patentansprüche

1. Lastkraftwagen, der Folgendes aufweist:
- Einen Motor;
- einen Gashebel, der von dem Bediener des Lastkraftwagens manuell bedienbar ist;
- ein Steuersystem, welches zur Regulierung der Drehzahl des Motors angeordnet ist; und
- eine Bremsanlage, die mindestens eine Bremse (3) aufweist, und die zum Abbremsen des Lastkraftwagens beim Verlangsamen angeordnet ist,
**dadurch gekennzeichnet, dass** die Bremsanlage Folgendes aufweist:
- einen Speicher (1) der angeordnet ist, um druckbeaufschlagtes Hydraulikfluid zu enthalten; und
- ein zwischen dem Speicher (1) und der Bremse (3) angeordnetes Proportionalventil (5),
wobei das Steuersystem angeordnet ist um zu erkennen, wann sich der Gashebel in einer Position befindet, die anzeigt, dass der Bediener den Vortrieb des Lastkraftwagens stoppen will, und um dann, wenn er sich in dieser Position befindet, das Proportionalventil (5) so zu regulieren, dass es die Bremsanlage mit Druck beaufschlagt und die Bremse (3) aktiviert, sowie um die Drehzahl des Motors zu drosseln.

2. Lastkraftwagen nach Anspruch 1,
**dadurch gekennzeichnet, dass** die Bremsanlage weiterhin Folgendes aufweist:
- ein zwischen dem Speicher (1) und einem Wechselventil (4) angeordnetes Bremsventil (6); und
- einen Bremshebel (7), der von dem Bediener des Lastkraftwagens manuell bedienbar ist,
wobei das Bremsventil (6) angeordnet ist, um die Bremsanlage mit Druck zu beaufschlagen und die Bremse (3) zu aktivieren, wenn der Bediener den Bremshebel (7) betätigt.

3. Lastkraftwagen nach einem der Ansprüche 1 und 2,
**dadurch gekennzeichnet, dass** die Drosselung der Motordrehzahl in Abhängigkeit von der Geschwindigkeit des Lastkraftwagens erfolgt.

4. Lastkraftwagen nach einem der Ansprüche 1-3,
**dadurch gekennzeichnet, dass** das Steuersystem angeordnet ist, um die Bremsanlage über das Proportionalventil (5) mit Druck zu beaufschlagen, und um ein zuvor festgelegtes, permanentes Bremsmoment auf die Bremsen (3) aufzubringen, wenn die Geschwindigkeit des Lastkraftwagens unter eine zuvor festgelegte Geschwindigkeit fällt.

5. Lastkraftwagen nach Anspruch 4,
**dadurch gekennzeichnet, dass** die Geschwindigkeit 2 km/h beträgt.

6. Lastkraftwagen nach einem der Ansprüche 1-5, wobei der Lastkraftwagen auch ein hydrostatisches Übertragungssystem, das zum Antreiben des Lastkraftwagens angeordnet ist und eine Übertragungspumpe (11) aufweist, die von dem Motor angetrieben ist, und einen Hydraulikmotor (12) aufweist,
**dadurch gekennzeichnet, dass** die Bremsanlage ein zweites Proportionalventil (8) aufweist, welches von dem Steuersystem geregelt wird und zum Kurzschließen von Hydraulikleitungen (9,10) zwischen der Übertragungspumpe (11) und dem Hydraulikmotor (12) beim Abbremsen angeordnet ist, wobei der Hydraulikmotor (12) ganz oder teilweise von der Übertragungspumpe (11) außer Eingriff gebracht wird.

7. Bremsanlage, die zur Anordnung in einem Lastkraftwagen vorgesehen ist, wobei der Lastkraftwagen Folgendes aufweist:
- Einen Motor;
- einen Gashebel, der von dem Bediener des Lastkraftwagens manuell bedienbar ist; und
- ein Steuersystem, welches zur Regulierung der Geschwindigkeit des Motors angeordnet ist;
wobei die Bremsanlage mindestens eine Bremse (3) aufweist, die zum Abbremsen des Lastkraftwagens beim Verlangsamen angeordnet ist,
**dadurch gekennzeichnet, dass** die Bremsanlage weiterhin Folgendes aufweist:
- einen Speicher (1) der angeordnet ist, um druckbeaufschlagtes Hydraulikfluid zu enthalten; und
- ein zwischen dem Speicher (1) und der Bremse (3) angeordnetes Proportionalventil (5),
wobei das Steuersystem auch ein Teil der Bremsanlage ist und angeordnet ist, um zu erkennen, wann sich der Gashebel in einer Position befindet, die anzeigt, dass der Bediener den Vortrieb des Lastkraftwagens stoppen will, und um dann, wenn er sich in dieser Position befindet, das Proportionalventil (5) so zu regulieren, dass es die Bremsanlage mit Druck beaufschlagt und die Bremse (3) aktiviert, sowie um die Drehzahl des Motors zu drosseln.

## Revendications

1. Camion présentant le suivant:
- Un moteur;
- un levier d'accélérateur qui peut être actionné manuellement par l'opérateur du camion;
- un système de commande disposé pour la régulation du nombre de tours du moteur; et
- un système de freinage ayant au moins un frein (3), et qui est disposé à freiner le camion lors du ralentissement,
**caractérisé en ce que**
le système de freinage présente le suivant:
- un réservoir (1) disposé pour contenir du fluide hydraulique alimenté avec de la pression; et
- une valve proportionnelle (5) disposée entre le réservoir (1) et le frein (3),
le système de commande étant disposé afin de reconnaître quand le levier d'accélérateur se trouve dans une position indiquant que l'opérateur veut arrêter la propulsion du camion, et pour régler, quand le même se trouve dans cette position, la valve proportionnelle (5) de sorte qu'elle alimente le système de freinage avec de la pression et active le frein (3), ainsi que pour réduire le nombre de tours du moteur.

2. Camion selon la revendication 1,
**caractérisé en ce que** le système de freinage en outre présente le suivant:
- une valve de freinage (6) disposée entre le réservoir (1) et une soupape à deux voies (4); et
- un levier du frein (7) qui peut être actionné de manière manuelle par l'opérateur du camion,
la valve de freinage (6) étant disposée à alimenter le système de freinage avec de la pression et à activer le frein (3), si l'opérateur actionne le levier du frein (7).

3. Camion selon une des revendications 1 et 2,
**caractérisé en ce que** la réduction du nombre de tours du moteur s'effectue en dépendance de la vitesse du camion.

4. Camion selon une des revendications 1-3,
**caractérisé en ce que** le système de commande est disposé afin d'alimenter le système de freinage avec de la pression par la valve proportionnelle (5), et.afin d'alimenter les freins (3) avec un moment de freinage déterminé à l'avance, si la vitesse du camion dépasse la vitesse déterminée à l'avance.

5. Camion selon la revendication 4,
**caractérisé en ce que**
la vitesse est 2 km/h.

6. Camion selon une des revendications 1-5, le camion ayant aussi un système de transmission qui est disposé pour propulser le camion, et une pompe de transmission (11) qui est entraînée par le moteur, et un moteur hydraulique (12),
**caractérisé en ce que**
le système de freinage présente une seconde valve proportionnelle (8) réglée par le système de commande, et qui est disposée pour court-circuiter des lignes hydrauliques (9,10) entre la pompe de transmission (11) et le moteur hydraulique (12) lors du freinage, le moteur hydraulique (12) étant mis complètement ou partiellement hors prise par la pompe de transmission (11).

7. Système de freinage prévu pour être disposé dans un camion, le camion présentant le suivant:
- Un moteur;
- un levier d'accélérateur qui peut être actionné manuellement par l'opérateur du camion; et
- un système de commande prévu pour la régulation du nombre de tours du moteur;
le système de freinage ayant au moins un frein (3), qui est prévu pour freiner le camion lors du ralentissement,
**caractérisé en ce que**
le système de freinage en outre présente le suivant:
- un réservoir (1) disposé pour contenir du fluide hydraulique alimenté avec de la pression; et
- une valve proportionnelle (5) disposée entre le réservoir (1) et le frein (3),
le système de commande étant aussi une partie du système de freinage et disposé afin de reconnaître quand le levier d'accélérateur se trouve dans une position indiquant que l'opérateur veut arrêter la propulsion du camion, et pour régler, quand le même se trouve dans cette position, la valve proportionnelle (5) de sorte qu'elle alimente le système de freinage avec de la pression et active le frein (3), ainsi que pour réduire le nombre de tours du moteur.
